# EUROPÄISCHE PATENTANMELDUNG

(11) **EP 1 942 297 A2**
(43) Veröffentlichungstag der Anmeldung: **09.07.2008**
(21) Anmeldenummer: 07023235.0
(22) Anmeldetag: 30.11.2007
(51) Int. Cl.: F16L 13/11, F16L 37/14

(54) **Bauwerk mit einer Mehrzahl von Betonfertigbauteilen**

(30) Priorität: 11.12.2006 DE 102006058619
(71) Anmelder: AREVA NP GmbH, 91052 Erlangen (DE)
(72) Erfinder: Trubnikow, Wladimir, 63069 Offenbach (DE); Hörtz, Bernd, 64347 Griesheim/Hessen (DE); Schmal, Bernd, 63500 Seligenstadt (DE); Christgau, Carsten, 60329 Frankfurt am Main (DE)
(74) Vertreter: Tergau & Pohl Patentanwälte

(57) **Zusammenfassung**

Ein Bauwerk (2), das sich aus mehreren, jeweils eine Anzahl von Wänden (z.B. 12, 14 bzw. 12', 14') umfassenden Betonfertigbauteilen (4, 4') zusammensetzt, wobei je zwei zueinander benachbarte Betonfertigbauteile (4, 4') über mindestens zwei aneinander stoßende Wände (z.B. 12, 12') miteinander verbunden sind, soll derart beschaffen sein, dass es sich besonders schnell und einfach zusammenmontieren lässt, wobei die Verbindung zwischen den einzelnen Betonfertigbauteilen (4, 4') zweckmäßigerweise auch beim Auftreten vergleichsweise hoher Querkräfte besonders biegesteif sein sollte. Dazu ist erfindungsgemäß vorgesehen, dass jede der beiden miteinander verbundenen Wände (z.B. 12, 12') an ihrer Anschlussseite (18 bzw. 18') eine Anzahl von durch Zwischenräume (20 bzw. 20') separierten Vorsprüngen (22 bzw. 22') aufweist, wobei die Vorsprünge (22) und Zwischenräume (20) der einen Wand (12) komplementär zu den Vorsprüngen (22') und Zwischenräumen (20') der anderen Wand (12') ausgestaltet sind, so dass sie in der Art einer Verzahnung wechselseitig ineinander greifen.

## Beschreibung

Die Erfindung betrifft ein Bauwerk, das sich aus mehreren, jeweils eine Anzahl von Wänden umfassenden Betonfertigbauteilen zusammensetzt, wobei je zwei zueinander benachbarte Betonfertigbauteile über mindestens zwei aneinander stoßende Wände miteinander verbunden sind.

Viele Bauwerke, wie z.B. Fertighäuser, Industriegebäude, aber auch z.B. Kabel-und sonstige Kanäle, werden heutzutage unter Verwendung von so genannten Betonfertigbauteilen hergestellt. Derartige Betonfertigbauteile oder Betonelemente sind industriell vorgefertigte Bauteile aus Beton, die am Stück an die Baustelle transportiert und dort endmontiert werden. Je nach Einsatzzweck und bestehenden Anforderungen an ihre Zug- oder Druckfestigkeit können sie auch mit einer Bewehrung versehen sein, z.B. aus Bewehrungsstahl. Man spricht dann auch von Stahlbetonelementen oder -fertigbauteilen. Derartige Ausprägungen mit einer Betoneinlage aus Stahl oder dergleichen sollen im Folgenden ausdrücklich durch den Begriff "Betonfertigbauteil" umfasst sein. Bedingt durch das hohe Maß an Standardisierung, das in der Regel mit der Verwendung von Betonfertigbauteilen einhergeht, lassen sich die entsprechenden Bauwerke vergleichsweise schnell und kostengünstig errichten.

Allerdings kann die feste und dauerhafte Verbindung zweier solcher Betonfertigbauteile bei der Endmontage auf der Baustelle immer noch vergleichsweise problematisch und aufwändig sein. Üblicherweise erfolgt der Anschluss bzw. die Verbindung der Bauteile dabei mit Hilfe von so genannter Anschlussbewehrung: Dazu sind die zu verbindenden Bauteile, z.B. (Stahl-) Betonwände, in ihrem Anschlussbereich mit über den Betongrundkörper hinausragenden oder abstehenden, in der Regel metallischen Bewehrungsbügeln versehen. Die beiden Bauteile werden dann zur Montage derart zueinander ausgerichtet und positioniert, dass ihre Bewehrungsbügel überlappend übereinander bzw. hintereinander angeordnet sind, so dass ein oder mehrere durchgehende Bewehrungsstäbe durch die Bügel hindurchgesteckt werden können. Anschließend wird der Anschlussbereich eingeschalt und betoniert, wodurch eine durch die Bügelbewehrung und die durchgehenden Bewehrungsstäbe verstärkte stoffschlüssige Verbindung zwischen den Fertigbetonbauteilen entsteht.

Gerade durch die Notwendigkeit der Einschalung und Betonierung des Anschlussbereiches ist ein derartiger Anschluss von Betonfertigbauteilen vergleichsweise zeit- und kostenintensiv. Dies gilt insbesondere bei der Vor-Ort-Montage von Stahlbetonkanälen aus einzelnen Kanalsegmenten in einem dafür vorgesehenen Erdaushub oder in einer Grube, beispielsweise im Industrie- oder Kraftwerksbau, mit entsprechend beengten Arbeits- und Raumverhältnissen. Wegen der durchzuführenden Montagearbeiten muss der Erdaushub häufig größer sein als für den Kanal an sich notwendig. Auch die genaue Ausrichtung der Bauteile zueinander vor der Betonierung des Anschlussbereiches ist mit relativ hohem Aufwand verbunden. Zudem bestehen gerade im Industriebau und im Kernkraftwerksbereich bei der Montage von Betonkanälen aus einzelnen vorgefertigten Kanalsegmenten, z.B. für die Aufnahme von Kabeln oder Rohrleitungen, besonders hohe Anforderungen an die Biegesteifigkeit der jeweiligen Verbindungsstelle, die mit den oben beschriebenen Verbindungs- und Montagetechniken nicht immer zu gewährleisten sind.

Der vorliegenden Erfindung liegt daher die Aufgabe zugrunde, ein Bauwerk der eingangs genannten Art, insbesondere einen Betonkanal für ein Kraftwerk, anzugeben, das sich unter Verwendung von Betonfertigbauteilen besonders schnell und einfach zusammenmontieren lässt, wobei die Verbindung zwischen den einzelnen Bauteilen zweckmäßigerweise auch beim Auftreten vergleichsweise hoher Druck- oder Querkräfte besonders biegesteif sein sollte.

Diese Aufgabe wird erfindungsgemäß gelöst, indem jede der beiden miteinander verbundenen Wände der Fertigbauteile an ihrer Anschlussseite eine Anzahl von durch Zwischenräume separierten Vorsprüngen aufweist, wobei die Vorsprünge und Zwischenräume der einen Wand komplementär zu den Vorsprüngen und Zwischenräumen der anderen Wand ausgestaltet sind, so dass sie in der Art einer Verzahnung wechselseitig ineinander greifen.

Die Erfindung geht von der Überiegung aus, dass zur Vereinfachung der Montage und für eine Verkürzung der erforderlichen Montagezeit bei der Verbindung von Betonfertigbauteilen auf die bislang übliche Einschalung und Betonierung des Anschlussbereiches verzichtet werden sollte. Stattdessen sollten die einzelnen Betonfertigbauteile bereits durch die Konturgebung ihres jeweiligen Anschlussbereiches dazu ausgelegt sein, dass ähnlich wie bei aus dem Holzbau bekannten Stoß- oder Zapfenverbindungen oder Verblattungen nach dem Nut-und-Feder-Prinzip ein die gegenseitige Lage und Ausrichtung zentrierendes Zusammenbringen oder Ineinanderstecken ermöglicht ist, wobei ein wesentlicher Teil der im späteren Betrieb oder Einsatz auf die Verbindungsregion wirkenden Druck- oder Querkräfte durch die zweckentsprechende Ausgestaltung der einzelnen Verbindungselemente und die Form und Lage ihrer einander berührenden Auflageflächen aufgenommen und kompensiert werden sollte.

Dazu ist nach dem hier vorgestellten Konzept eine zumindest teilweise formschlüssige Verbindung zwischen den Betonfertigbauteilen vorgesehen, bei der die randseitig am jeweiligen Bauteil angebrachten Vorsprünge oder Konsolen in der Art komplementärer Verbindungspartner im Wesentlichen spaltfrei ineinander greifen und dabei eine Verzahnung bilden. Auf diese Weise werden - zumindest im Prinzip - die statischen Kräfte, die durch die Betriebsbelastung verursacht werden, rechtwinklig zu den Berührungs- oder Auflageflächen der jeweiligen Verbindungspartner in den Innenbereich der Bauteile übertragen und darin kompensiert. Eine gegenseitige Verschiebung der Bauteile ist - jedenfalls in Ausdehnungsrichtung der jeweiligen "Zahnreihe" - auch bei vergleichsweise hoher Druck-oder Biegebeanspruchung sicher vermieden, ohne dass es dazu einer stoffschlüssigen, monolitischen Verbindung zwischen den Bauteilen bedarf.

Für eine besonders hohe Stabilität und strukturelle Integrität auch bei höchsten Belastungen sind die anschlussseitigen Vorsprünge oder Konsolen vorteilhafterweise integraler Bestandteil der jeweiligen Wand und damit des jeweiligen Fertigbauteils. Das heißt, sie werden bei dessen Herstellung mitgegossen. Der dazu erforderliche, aufgrund der kompiexeren Außenkonturen des Bauteils leicht erhöhte Aufwand für die Herstellung der Verschalung fällt bei der industriellen Massenfabrikation derartiger Fertigbauteile kaum ins Gewicht, da ein- und dieselbe Verschalung für mehrere Betoniervorgänge verwendet werden kann.

Besonders vorteilhaft ist es, wenn die ineinandergreifenden bzw. miteinander verzahnten Vorsprünge der miteinander verbundenen Betonfertigbauteile jeweils eine entlang einer gemeinsamen Achse ausgerichtete Bohrung oder Ausnehmung aufweisen, wobei die Achse im Wesentlichen senkrecht zur Erhebungsrichtung der Vorsprünge ausgerichtet ist, so dass sich über die gesamte Verzahnung oder zumindest einen wesentlichen Teil ihrer seitlichen Ausdehnung hinweg ein zusammenhängender Hohlraum mit zumindest einer von außen zugänglichen Einschuböffnung ausbildet. In den sich so ausbildenden Hohlraum wird dann nach dem Zusammenfügen der Bauteile bzw. nach dem "Herstellen" der Verzahnung ein die Verbindung sicherndes Schubelement, insbesondere eine Stahlstange oder ein Stahlstab, hineingesteckt.

Vorzugsweise hat der Hohlraum eine zylindrische Gestalt; die Stahl- oder Schubstange hat dementsprechend einen kreisförmigen Querschnitt und ist vom Durchmesser her zweckmäßigerweise derart auf den Durchmesser des Hohlzylinders abgestimmt, dass sie - von einem vergleichsweise kleinen Restspalt abgesehen - nach dem Einschieben im Wesentlichen spielfrei in selbigen eingeklemmt ist. Auf diese Weise ist zum einen ein Lösen der Verbindung infolge quer zur Ausdehnungsrichtung der Zahnreihe an den einzelnen Bauteilen angreifender Druck-oder Zugkräfte sicher verhindert; zum anderen verleiht die Schubstange der Anordnung bei entsprechender Passform, d.h. bei gutem Klemmsitz im Hohlraum, eine besonders hohe Biegesteifigkeit, insbesondere in Bezug auf parallel / senkrecht zur Achse der Schubstange angreifende bzw. auf die Verbindungsregion drückende externe Kräfte, z.B. aufgrund von seismischen Einwirkungen oder beim Schwerlast-Transport.

In vorteilhafter Ausgestaltung wird nach dem Einschieben der Schubstange in den Hohlraum ein dazwischen liegender Spalt mit einer erhärtenden Füllmasse, insbesondere mit quellfähigem Vergussmörtel, ausgefüllt oder verpresst. Mit dieser Füllmasse werden zweckmäßigerweise auch alle zwischen den ineinandergreifenden Vorsprüngen liegende Fugen oder Spalten abgedichtet. Besonders vorteilhaft ist es, die Füllmasse mit hohem Druck von der Seite der leicht von außen zugänglichen Einschuböffnung her in den beispielsweise ringförmigen Spalt zwischen der Außenseite der Schubstange und der Innenfläche des durch die einzelnen Ausnehmungen in den Vorsprüngen gebildeten Hohlraums hineinzupressen, so dass sie druckbedingt noch vor der einsetzenden Erhärtung durch die von den vom Spalt "abzweigenden" Fugen zwischen den die Verzahnung bildenden Vorsprüngen gedrückt wird und diese dann mit einsetzender Erhärtung verschließt.

Vorteilhafterweise besitzen die die Verzahnung bildenden Vorsprünge eine quaderförmige Gestalt. Vorzugsweise sind dabei alle Vorsprünge der jeweiligen Anschlussseite einer Wand auf einer ebenen Grundfläche, vorzugsweise auf einer Kantenfläche der Wand, angeordnet und besitzen die gleiche Höhe über der Grundfläche. Die Breite der einzelnen Vorsprünge ist vorteilhafterweise im Wesentlichen gleich groß, ebenso die Breite der dazwischenliegenden, ebenfalls quaderförmigen Zwischenräume, so dass sich insgesamt eine hoch standardisierte und einfach herzustellende" Rechteckverzahnung" oder "Quaderverzahnung" ohne Hinterschneidungen oder dergleichen ergibt.

Das hier beschriebene Konzept kann im Prinzip zur Errichtung verschiedenartigster, in modularer Bauweise aus einer Mehrzahl von Betonfertigbauteilen zusammengesetzter Bauwerke oder Baukörper eingesetzt werden. Besonders vorteilhaft ist jedoch die Anwendung auf Betonkanäle im Kraftwerksbau. In diesem Anwendungsfall weist in zweckmäßiger Ausgestaltung jedes der Betonfertigbauteile eine Deckenwand und eine Bodenwand sowie zwei Seitenwände auf, die einen Längsabschnitt eines Kanals von vorzugsweise rechteckigem Querschnitt bilden, wobei die Betonfertigbauteile entlang einer Längsachse hintereinander ausgerichtet und miteinander verbunden angeordnet sind. Bevorzugt sind dabei die die Verzahnung bildenden Vorsprünge und Zwischenräume jeweils an den stirnseitigen Enden der beiden Seitenwände angeordnet.

Diese Variante hat den Vorteil, dass ein für den Betonkanal vorgesehener Erdaushub nicht wesentlich breiter zu sein braucht als der Kanal selbst. Die die einzelnen Kanalsegmente bildenden Betonfertigbauteile werden z.B. mit Hilfe eines Krans der Reihe nach in Längsrichtung in dem ausgehobenen Schacht abgelegt und in Längsrichtung gegeneinander verschoben, so dass die jeweils an den stirnseitigen Endregionen der Segmente angeordneten Vorsprünge wie vorgesehen zahnartig ineinander greifen. Schließlich werden die gegebenenfalls vorgesehenen Schubstangen einfach von oben her in die vertikal orientierten zylindrischen Hohlräume abgesenkt bzw. eingeschoben und anschließend mit quellfähigem Vergussmörtel verpresst. Ein seitlicher Zugang zu den Kanalelementen oder -segmenten ist nicht erforderlich.

Die mit der Erfindung erzielten Vorteile bestehen insbesondere darin, dass durch einen konsolenartig verzahnten Anschluss von Betonfertigbauteilen ein aus diesen modular zusammengesetztes Bauwerk, insbesondere ein Betonkanal im Kraftwerksbau, auf besonders einfache und schnelle Weise mit geringem Kostenanfall errichtet bzw. zusammenmontiert werden kann, wobei insbesondere bei einer Sicherung der Verzahnung mit Hilfe eines durch entsprechende Ausnehmungen in den "Zähnen" hindurchgesteckten Schubelementes und anschließender Verpressung etwa verbliebener Hohlräume mit Mörtel eine besonders biegesteife Verbindung realisierbar ist.

Ein Ausführungsbeispiel der Erfindung wird anhand einer Zeichnung näher erläutert. Darin zeigen:
- Fig. 1: einen Abschnitt eines aus Betonfertigbauteilen zusammengesetzten Betonkanals in Seitenansicht,
- Fig. 2: eine Draufsicht auf den Betonkanal gemäß Fig. 1,
- Fig. 3: einen Querschnitt durch den Betonkanal gemäß Fig. 1 und Fig. 2 im Anschlussbereich zweier Betonfertigbauteile, und
- Fig. 4: ein vergrößert herausgegriffenes Detail aus der Schnittdarstellung gemäß Fig. 3.

Gleiche Teile sind in allen Figuren mit denselben Bezugszeichen versehen.

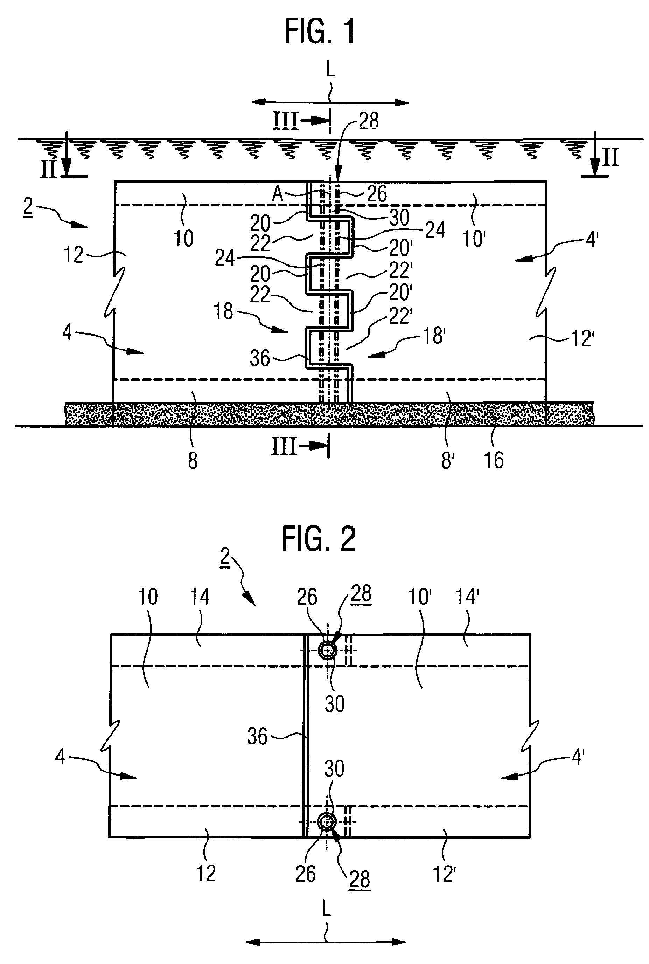

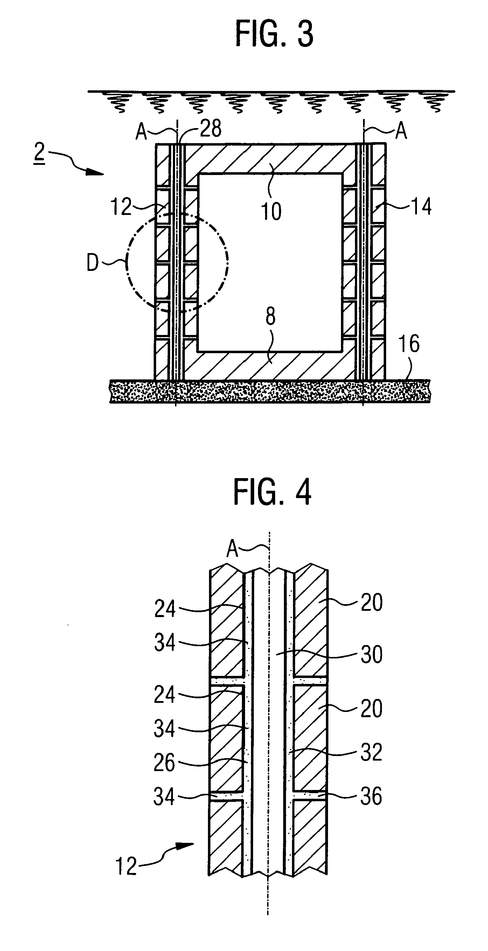

Das in Fig. 1 in einer Seitenansicht und in Fig. 2 in einer Draufsicht von oben dargestellte Bauwerk 2, ein Betonkanal zur Aufnahme von Versorgungsleitungen eines Kraftwerks, ist aus einer Mehrzahl von in Längsrichtung L hintereinander angeordneten und jeweils miteinander verbundenen Betonfertigbauteilen 4, 4' zusammengesetzt, von denen im hier dargestellten Ausschnitt allerdings nur zwei sichtbar sind. Jedes der in Stahlbetonbauweise als integrales Element industriell vorgefertigten Betonfertigbauteile 4, 4' bildet damit ein Teilsegment des Betonkanals, der hier im Ausführungsbeispiel einen rechteckigen Innenquerschnitt aufweist (siehe auch Fig. 3), und umfasst eine Bodenplatte 8 bzw 8', eine Deckenplatte 10, bzw. 10' und zwei Seitenwände 12, 14 bzw. 12', 14'. Die Bodenplatten 8, 8' der Betonfertigbauteile 4, 4' liegen im hier dargestellten Montageendzustand waagrecht ausgerichtet auf einem ebenen Untergrund, hier ein Kiesbett 16, auf. Die Seitenwände 12, 14 bzw. 12', 14' sind daher vertikal, sprich senkrecht zur Längsrichtung L ausgerichtet.

Um bei der Montage des Betonkanals am Einsatzort einen besonders einfachen, schnellen und zugleich sicheren und präzisen Anschluss der einzelnen Betonfertigbauteile 4, 4' zu ermöglichen, sind die stirnseitigen Anschlussbereiche 18, 18' der Seitenwände 12, 12' und 14, 14' sowie der Bodenplatten 8, 8' und der Dekkenplatten 10, 10' der miteinander zu verbindenden Betonfertigbauteile 4, 4' in Bezug auf ihre Kontur derart aufeinander abgestimmt, dass sich beim Zusammenschieben zweier auf dem Untergrund aufliegender, zuvor separierter Betonfertigbauteile 4, 4' - das heißt, wenn die auf gleicher Höhe befindlichen Betonfertigbauteile 4, 4' in Längsrichtung L aufeinander zu bewegt werden - eine Verzahnung der Anschlussregion, insbesondere zwischen den aneinander stoßenden Seitenwänden 12, 12' und 14, 14', ausbildet.

Im Ausführungsbeispiel gemäß Fig. 1 weist daher die Seitenwand 12 des Betonfertigbauteils 4 an ihrer rechten Anschlussseite 18 mehrere, jeweils durch Zwischenräume 20 voneinander beabstandete quaderförmige Vorsprünge 22 auf, so dass sich dort in der Seitenansicht gemäß Fig. 1 eine regelmäßige Rechteckkontur ausbildet. Die Seitenwand 12' des in Fig. 1 rechts angeordneten Betonfertigbauteils 4' weist an ihrer linken Anschlussseite 18' eine dazu komplementäre Rechteckkontur mit Zwischenräumen 20' und Vorsprüngen 22' auf, so dass die Vorsprünge 22 der Seitenwand 4 in der Art einer passgenauen Verzahnung in die Zwischenräume 20' zwischen den Vorsprüngen 22' der rechten Seitenwand 4' eingreifen und umgekehrt. Für die in Fig. 1 von den vorderen Seitenwänden 12, 12' verdeckten hinteren Seitenwände 14, 14' gilt entsprechendes, wobei die Kontur dieser "hinteren" Verzahnung im Ausführungsbeispiel mit derjenigen der "vorderen" Verzahnung übereinstimmt, in der seitlichen Projektion entlang der Blickrichtung von Fig. 1 also deckungsgleich zu liegen kommt.

Die Ausdehnung der jeweiligen Bodenplatte 8 bzw. 8' oder Deckenplatte 10 bzw. 10' in Längsrichtung L richtet sich im Ausführungsbeispiel nach der entsprechenden Ausdehnung der angrenzenden Seitenwände 12, 14 bzw. 12', 14' des Betonfertigbauteils 4 bzw. 4' in diesem Bereich; sie hängt also davon ab, ob die jeweilige "Zahnreihe" dort mit einem "Zahn", d.h. einem Vorsprung 22 bzw. 22' endet oder mit einer "Zahnlücke" (der Einfachheit halber soll diese ebenfalls von dem Begriff "Zwischenraum" umfasst sein). Analog zu den miteinander verzahnten Seitenwänden 12, 12' und 14, 14' schließen die Bodenplatten 8, 8' und die Dekkenplatten 10, 10' der miteinander verbundenen Betonfertigbauteile 4, 4' - von einer jeweils vergleichsweise schmalen Fuge abgesehen - unmittelbar und ohne wesentliche Zwischenräume aneinander an.

Wie besonders gut anhand der Querschnittsdarstellung gemäß Fig. 3 und der zugehörigen vergrößerten Darstellung des in Fig. 3 mit einem durchgezogenen Kreis markierten Details D in Fig. 4 erkennbar ist, weisen die einzelnen Vorsprünge 22, 22' oder Betonkonsolen jeweils eine zentral angeordnete zylindrische Ausnehmung 24 auf, so dass sich im miteinander verzahnten Zustand ein von oben nach unten durch die Anschlussregion durchgehender, entlang einer gemeinsamen vertikalen Achse A ausgerichteter zylindrischer Hohlraum 26 konstanten Innendurchmessers ausbildet. In diesen Hohlraum 26 wird während der Montage des Betonkanals durch die von oben, d.h. von der Deckenplatte 10' her zugängliche Einschuböffnung 28 eine als Schubelement 30 wirksame zylindrische Stahlstange eingesteckt, deren Durchmesser geringfügig kleiner gehalten ist als der Durchmesser des zylindrischen Hohlraums 26. Der zwischen der Außenseite des Schubelements 30 und den umgebenden Wandabschnitten der Betonkonsolen verbleibende, im Querschnitt im Wesentlichen ringförmige Spalt 32 wird anschlie-ßend mittels einer quellfähigen Füllmasse 34, hier Vergussmörtel, verpresst. Au-ßerdem werden alle horizontalen und vertikalen Fugen 36 zwischen den verzahnten Betonkonsolen bzw. Vorsprüngen 22, 22' mit dieser Füllmasse 34 abgedichtet. Insgesamt entsteht somit eine ausgesprochen sichere Verbindung zwischen den Betonfertigbauteilen 4, 4', wobei infolge der Schubspannungen, welche durch die in die Verzahnung der Betonkonsolen eingelassenen und mit Vergussmörtel verpressten Schubelemente 30 erzeugt werden, eine besonders hohe Biegesteifigkeit des Anschlusses gewährleistet ist.

Bei entsprechender Abwandlung der konstruktiven Details lassen sich auf der Grundlage des hier vorgestellten Konzeptes darüber hinaus auch Über-Eck-Verbindungen und dergleichen von Wand- oder sonstigen Bauteilen aus Beton herstellen. Auf eine detaillierte Beschreibung kann an dieser Stelle verzichtet werden.

### Bezugszeichenliste

- 2: Bauwerk
- 4, 4': Betonfertigbauteil
- 8, 8': Bodenplatte
- 10, 10': Deckenplatte
- 12, 12': Seitenwand
- 14, 14': Seitenwand
- 16: Kiesbett
- 18, 18': Anschlussseite
- 20, 20': Zwischenraum ("Zahnlücke")
- 22, 22': Vorsprung ("Zahn")
- 24: Ausnehmung
- 26: Hohlraum
- 28: Einschuböffnung
- 30: Schubelement (Stahlstange)
- 32: Spalt
- 34: Füllmasse (Vergussmörtel)
- 36: Fuge

- A: Achse
- D: Detail
- L: Längsrichtung

## Patentansprüche

1. Bauwerk (2), das sich aus mehreren, jeweils eine Anzahl von Wänden (z.B. 12, 14 bzw. 12', 14') umfassenden Betonfertigbauteilen (4, 4') zusammensetzt, wobei je zwei zueinander benachbarte Betonfertigbauteile (4, 4') über mindestens zwei aneinander stoßende Wände (z.B. 12, 12') miteinander verbunden sind, wobei jede der beiden miteinander verbundenen Wände (z.B. 12, 12') an ihrer Anschlussseite (18 bzw. 18') eine Anzahl von durch Zwischenräume (20 bzw. 20') separierten Vorsprüngen (22 bzw. 22') aufweist, und wobei die Vorsprünge (22) und Zwischenräume (20) der einen Wand (12) komplementär zu den Vorsprüngen (22') und Zwischenräumen (20') der anderen Wand (12') ausgestaltet sind, so dass sie in der Art einer Verzahnung wechselseitig ineinander greifen.

2. Bauwerk (2) nach Anspruch 2, bei dem die Vorsprünge (22 bzw. 22') integraler Bestandteil der jeweiligen Wand (12 bzw. 12') sind.

3. Bauwerk (2) nach Anspruch 1 oder 2, bei dem die miteinander verzahnten Vorsprünge (22, 22') jeweils eine entlang einer gemeinsamen Achse (A) ausgerichtete Bohrung oder Ausnehmung (24) aufweisen, wobei die Achse (A) im Wesentlichen senkrecht zur Erhebungsrichtung der Vorsprünge (22, 22') ausgerichtet ist, so dass sich über die gesamte Verzahnung oder zumindest einen wesentlichen Teil ihrer seitlichen Ausdehnung hinweg ein zusammenhängender Hohlraum (26) mit zumindest einer von außen zugänglichen Einschuböffnung (28) ausbildet, in die ein die Verbindung sicherndes Schubelement (30), insbesondere eine Stahlstange oder ein Stahlstab, hineingesteckt ist.

4. Bauwerk (2) nach Anspruch 3, bei dem ein zwischen der Außenseite des Schubelementes (30) und der Innenseite des Hohlraumes (26) vorhandener Spalt (32) sowie die Fugen (36) zwischen den ineinander greifenden Vorsprüngen (22, 22') mit einer erhärtenden Füllmasse (34), insbesondere mit quellfähigem Vergussmörtel, ausgefüllt sind.

5. Bauwerk (2) nach einem der Ansprüche 1 bis 4, bei dem die Vorsprünge (22, 22') eine quaderförmige Gestalt besitzen.

6. Bauwerk (2) nach Anspruch 5, bei dem alle Vorsprünge (22 bzw. 22') der jeweiligen Anschlussseite (18 bzw. 18') einer Wand (12 bzw. 12') auf einer ebenen Grundfläche, vorzugsweise auf einer Kantenfläche der Wand (12 bzw. 12'), angeordnet sind und die gleiche Höhe über der Grundfläche besitzen.

7. Bauwerk (2) nach einem der Ansprüche 3 bis 6, bei dem die jeweilige Bohrung oder Ausnehmung (24) einen kreisförmigen Querschnitt aufweist.

8. Bauwerk (2) nach einem der Ansprüche 1 bis 7, bei dem jedes der Betonfertigbauteile (4 bzw. 4') eine Deckenwand (10 bzw. 10') und eine Bodenwand (8 bzw. 8') sowie zwei Seitenwände (12, 14 bzw. 12' 14') aufweist, die einen Längsabschnitt eines Kanals von vorzugsweise rechteckigem Querschnitt umschließen, wobei die Betonfertigbauteile (4, 4') entlang einer Längsachse hintereinander angeordnet und jeweils derart miteinander verbunden sind, dass das Bauwerk (2) insgesamt einen Betonkanal bildet.

9. Bauwerk (2) nach Anspruch 8, bei dem die die Verzahnung bildenden Vorsprünge (22, 22') und Zwischenräume (20, 20') jeweils an den stirnseitigen Enden der beiden Seitenwände (12, 14 bzw. 12', 14') angeordnet sind.
